# EUROPEAN PATENT APPLICATION

(11) **EP 3 156 425 A1**
(43) Date of publication of application: **19.04.2017**
(21) Application number: 16182247.3
(22) Date of filing: 01.08.2016
(51) Int. Cl.: C08B 30/04

(54) **CORN FLOUR-BASED FOOD PREPARATION FOR HUMAN USE AND PROCESS FOR OBTAINING IT**

(30) Priority: 16.10.2015 IT UB20154979
(71) Applicant: AL.CA.FOODS S.r.l., 35047 Solesino (IT)
(72) Inventor: CASTELLO, Luigino, 35047 SOLESINO (PD) (IT)
(74) Representative: Vinci, Marcello

(57) **Abstract**

The invention is a corn flour-based food preparation for human use or polenta, packaged when cooked and ready for use with no need for further cooking operations, and wherein the consistency of said polenta is substantially fluid.

## Description

The present patent concerns cereal flour-based food products for human use, and in particular it concerns a new corn flour-based food preparation for human use and the process for obtaining it.

Cereal flour-based food products are known.

The preparation based on cereal flour, generally corn flour, commonly called polenta is known, which is obtained by cooking a semi-liquid mixture of water and flour.

Normally, polenta is prepared by cooking said mixture for approximately one hour, during which the mixture must be continuously stirred.

Sometimes this process is excessively long for the user who has to prepare polenta for domestic use or even for catering purposes.

Not pre-cooked flours are available on the market, which need to be mixed with water and other possible ingredients of choice in the right proportion and then cooked for approximately one hour.

Pre-cooked flours are also known, which are used to reduce cooking times and can be mixed with water and other possible ingredients of choice and then cooked for just a few minutes.

Ready made polenta is also known, which is obtained through an industrial process according to which the polenta is prepared and cooked before being vacuum packaged. The ready made polenta portions available on the market are generally in a substantially parallelepiped or in any case three-dimensional shape, rather solid in terms of consistency, meaning such that they maintain their shape unchanged independently of the shape of their container.

The consistency of the presently known polenta obtained from corn flour is due to the presence of starch in the flour and varies also according to the quantity of water contained in the mixture.

The paste obtained after cooking is more or less solid, depending on the quantity and type of starch that is extracted and expanded during the cooking process.

It is therefore possible to prepare different kinds of polenta having different degrees of consistency according to the tastes of the consumer or the consumption needs.

In the traditional product, after the cooking process, during the cooling stage, the polenta mixture solidifies when the portion of starch that gelatinizes (amylose) forms a gel that takes the shape of the container of the product. Therefore, if the polenta is prepared in such a way that it is substantially fluid and the obtained product does not maintain a shape of its own when it is still hot, after cooling down said polenta becomes more solid and is capable of maintaining a shape of its own.

In fact, the starch contained in the flour used for the mixture tends to modify the consistency of the polenta over the time during which it cools down, and the polenta thus tends to solidify. This change in consistency is substantially irreversible, meaning that once the polenta has solidified it is not possible to make it fluid again, unless mechanical treatments for breaking down the lumps are used.

Therefore, in order to obtain a substantially fluid polenta it is presently necessary that the latter be prepared immediately before consumption, while at present it is not possible to obtain a type of polenta that remains substantially fluid even after cooling down or after a given time interval.

According to the known technique and the available literature on the subject, polenta is creamy immediately after its preparation, but then it tends to solidify to the extent that it can assume and maintain the shape of the container in which the solidification process has taken place. In fact, once having been extracted from the container, the polenta maintains said shape and consequently can be cut, for example in slices. At the moment, therefore, there isn't any type of polenta capable of maintaining the creamy consistency of just made polenta unchanged.

The subject of the present invention is a new type of corn flour-based polenta whose consistency remains unchanged over time and independently of its temperature, and in particular whose consistency is substantially fluid, meaning that the obtained product has no shape of its own.

The main object of the present invention is to provide a type of polenta that substantially remains fluid even after cooling down or after a given time interval.

It is another object of the present invention to provide a ready made polenta which does not need further cooking stages.

The new polenta, in fact, is already cooked and ready to be used, unless the consumer wishes to warm the product to the desired extent.

It is another object of the present invention to provide a type of polenta that remains substantially fluid, with no need for mechanical treatments intended to break down the lumps.

It is another object of the present invention to provide a type of polenta that remains substantially fluid with no need for the addition of water or other liquids.

In order to overcome all the drawbacks described above, a new kind of polenta has been studied and produced, whose content of amylose in weight is lower than 12% of the total starch content.

The applicant has found out that, among the countless possible compositions, the new polenta obtained with the composition described above assumes a fluid consistency that, surprisingly, does not vary over time, but remains substantially unaltered independently of its temperature and of the time elapsed from its preparation, within certain given intervals.

Therefore, said polenta can be sold already cooked and ready to be used, with no need for further cooking operations, and can be warmed up an indefinite number of times, without its consistency being altered.

In particular, the new polenta having the composition described above substantially has a fluid consistency, so that it assumes the shape of the container in which it is poured, meaning that it does not have a shape of its own, differently from the ready made polenta known at present, which has a substantially solid consistency, meaning such a consistency as to be able to maintain a shape of its own.

The new polenta is characterized by a content of amylose in weight is lower than 12% of the total starch content.

The new polenta comprises in particular said corn flour obtained from one or more different types of corn, water, salt if necessary, correctors, characterizing ingredients and/or aromas.

The process for making the new polenta therefore includes the use of flours made from one or more different types of corn.

Alternatively to or in combination with the details illustrated above, according to the invention the process for making the new polenta is made up of one or more processes of the chemical and/or biological and/or biochemical and/or thermal type for breaking down starch.

Therefore, with reference to the above description, the following claims are expressed.

## Claims

1. Corn flour-based food preparation for human use or polenta, comprising corn flour, packaged once cooked and ready for use, **characterized in that** the content of amylose in weight is lower than 12% of the total starch content, and wherein the consistency of said polenta is substantially fluid, meaning that it does not have a shape of its own, and wherein said consistency does not vary over time but remains substantially unaltered, independently of the temperature and the time elapsed from its preparation.

2. Polenta according to claim 1, **characterized in that** said corn flour is obtained by using one or more different types of corn.

3. Polenta according to claim 1, **characterized in that** corn flours are used that are obtained from one or more types of corn, water, salt if necessary, correctors, characterizing ingredients and/or aromas.

4. Process for making polenta or a corn flour-based food preparation, **characterized in that** it comprises the use of flours obtained from one or more different types of corn.

5. Process for making polenta or a corn flour-based food preparation, **characterized in that** it comprises one or more processes of chemical and/or biological and/or biochemical and/or thermal type for breaking down starch.
